(19) Europäisches Patentamt / European Patent Office / Office européen des brevets

(11) **EP 2 725 920 B1**

(12) **EUROPEAN PATENT SPECIFICATION**

(45) Date of publication and mention
of the grant of the patent:
**16.03.2016 Bulletin 2016/11**

(21) Application number: **12730965.6**

(22) Date of filing: **29.06.2012**

(51) Int Cl.:
*A23F 5/38* (2006.01)

(86) International application number:
**PCT/EP2012/062669**

(87) International publication number:
**WO 2013/001052 (03.01.2013 Gazette 2013/01)**

(54) **METHOD FOR MANUFACTURING SOLUBLE COFFEE TABLETS**

VERFAHREN ZUR HERSTELLUNG VON LÖSLICHEN KAFFEETABLETTEN

PROCÉDÉ POUR FABRIQUER DES TABLETTES DE CAFÉ SOLUBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 FR 1155864
19.07.2011 US 201161509497 P**

(43) Date of publication of application:
**07.05.2014 Bulletin 2014/19**

(73) Proprietor: **Eurotab
42170 Saint Just Saint Rambert (FR)**

(72) Inventors:
• **SOQUET, Valerie
69100 Villeurbanne (FR)**
• **BRANLARD, Paul
F-69005 Lyon (FR)**
• **BONNEAU, Eric
F-38460 Saint Romain de Jalionas (FR)**

(74) Representative: **Regimbeau
139, rue Vendôme
69477 Lyon Cedex 06 (FR)**

(56) References cited:
EP-A1- 0 124 663          EP-A1- 0 229 920
EP-A1- 0 998 921          WO-A1-2004/034798
WO-A1-2007/077970     FR-A1- 2 912 877
GB-A- 2 188 915          GB-A- 2 196 228
US-A- 3 121 635          US-A1- 2010 260 915

EP 2 725 920 B1

**Description**

FIELD OF THE INVENTION

The present invention relates to the field of coffee tablets, and more precisely to a method for manufacturing soluble coffee tablets.

TECHNICAL BACKGROUND

The packaging of food products in tablet form to improve the use, transport, storage, etc. of said food products is a concern that has existed for many years.

The differences in the nature of various food products have, however, imposed the development of varied manufacturing techniques, incompatible with each other, and specifically adapted to the nature of the food product to manufacture in tablet form.

For example, in the case of the production of tablets containing crystalline materials such as salt or sugar, documents EP 1 008 554, GB 1 384 384, GB 2 188 915 and WO 00/73208 can be cited.

Other production techniques have been developed, for example, for the production of milk tablets. Related documents among others include US 2,379,230, AU2009/101002, GB 438 509, WO 2006/004190, WO 2007/077970, which describe various methods specifically adapted to the particular characteristics of dairy products.

In the field of coffee tablets, which is of most particular interest herein, numerous more or less complex, and more or less advantageous, techniques have also been developed, but always specifically developed according to characteristics of the base material, namely coffee. There are namely two types of coffee tablets, i.e. on the one hand roast and ground coffee tablets wherein the active principle of coffee is extracted by a specific process such as lixiviation, and on the other hand soluble coffee tablets which are adapted for full dissolution into hot water.

Concerning roast and ground coffee tablets, it may for instance be referred to EP 2 129 232 or EP 0 229 920 which disclose specific methods for forming tablets of roast and ground coffee. Such methods enable forming tablets of roast and ground coffee, which ease the dosing of the coffee to be extracted - by lixiviation - and its handling. However, such roast and ground coffee tablets still need to be used with a specific extraction process, generally requiring a corresponding coffee maker, which is restrictive for the consumer. This explains why the consumers prefer using soluble coffee which is much more convenient to make a quick and easy coffee.

Concerning soluble coffee tablets, the following documents can be cited: US 3,121,635, CA 2 027 406, US 1,137,265, US 2,889,226, GB 2 196 228, SE 465 995, DE 199 19 204. A major disadvantage generally present in each manufacturing process described in these documents is the necessary presence of additives to form the tablet and to enable such a tablet to have the required properties in terms of resistance and dissolution time.

To overcome this disadvantage, a novel method for manufacturing a soluble coffee tablet without use of an additive was recently proposed in document WO 2004/034798. This method consists in placing a coffee-based aqueous solution in a compaction mold and compacting this solution, which will have been frozen beforehand or during this compaction. Gas is preferably injected into the coffee solution, before freezing, to promote the formation of pores in the final tablet. The coffee solution can take the form of a coffee-based paste, or can be a frozen mixture of water and fine coffee particles. This manufacturing method combines to some extent the compaction method and the freeze-drying method. This manufacturing method makes it possible to form soluble coffee tablets having an internal pore structure in which the pores are interconnected, each pore having a size from 5 micrometers to 50 micrometers. The compaction proposed in this document makes it possible to obtain a tablet surface with a pore structure different from the internal pore structure, namely with transverse pores (*i.e.* pores open on both the exterior side and the interior side of the structure) of a smaller size than the pores of the internal structure, and in smaller number. It thus appears that the tablet formed by this manufacturing method has a very porous principal structure surrounded by a surface layer which closes the porosity of this principal structure. This manufacturing method is, however, relatively complex to implement.

A goal of the present invention is thus to propose a method for manufacturing a soluble coffee tablet which resolves at least one of the above-mentioned disadvantages.

In particular, a goal of the present invention is to propose a method for manufacturing a soluble coffee tablet which is simple to implement.

Another goal of the present invention is to propose a soluble coffee tablet and an associated manufacturing method, wherein said tablet has an increased mechanical resistance, at least sufficient to allow its handling, its transport and its storage, and which exhibits rapid dissolution.

SUMMARY OF THE INVENTION

To this end, a method for manufacturing a soluble coffee tablet comprising the following successive steps is proposed:

a. Taking a quantity of a coffee composition comprising soluble coffee particles;
b. Compaction of the coffee composition to form a compacted coffee product of three-dimensional form;
c. Moistening of said compacted coffee product to moisten the exterior surface of the compacted product;
d. Drying of the moistened compacted product to form the soluble coffee tablet, as claimed.

Preferably, the coffee composition comprises coffee that consists of soluble coffee particles, that is to say the coffee comprises 100% of soluble coffee particles.

This method makes it possible to form a soluble coffee tablet having an internal part and an external part entirely surrounding the internal part, also referred as a core and crust structure.

The method is preferably parameterized so that the internal part is a porous core promoting dissolution of the tablet and the external part forms a hardened crust that increases the mechanical resistance of the tablet. The external part forming a crust is thick, i.e. it has a thickness of at least 20 micrometers, and preferably a thickness between 20 micrometers and 250 micrometers.

The moistening and drying steps are made so that the external part of the soluble coffee tablet has a greater density than the density of the internal part.

Preferred but non-restrictive aspects of this method for manufacturing soluble coffee tablets, taken alone or in combination, are as follows:

- The coffee composition comprises only coffee without any other components, said coffee consisting of soluble coffee particles.
- Step b) of compaction comprises the following successive steps:

  b1) Placement of the coffee composition in a confined space;
  b2) Application of a determined compaction stress to obtain a compacted product with a density between 0.4 $g/cm^3$ and 0.8 $g/cm^3$, and preferably between 0.45 $g/cm^3$ and 0.7 $g/cm^3$, and even more preferably between 0.5 $g/cm^3$ and 0.6 $g/cm^3$;
  b3) Release of the compaction stress.

- Step b2) of application of a determined compaction stress consists in applying a determined compaction pressure to said coffee composition.
- The compaction pressure is between 0.8 MPa and 15 MPa, preferably between 1.3 MPa and 7 MPa, and even more preferably between 2 MPa and 4.5 MPa.
- Step b2) of application of a determined compaction stress consists in maintaining the coffee composition at a determined compaction volume for a given time.
- Step c) of moistening comprises the addition of a quantity of water so as to obtain a moistening of the exterior surface of the compacted product to a depth of at least 20 micrometers, and preferably to at least 40 micrometers.
- Step c) of moistening is carried out by spraying water in direction of the surface of the compacted product.
- Said step c) of moistening is carried out by suspending the compacted product in air in a controlled moist atmosphere.
- Step d) of drying of the moistened compacted product is designed to evaporate the water contained in the moistened external portion of the moistened compacted product.
- Step d) of drying of the moistened compacted product is controlled to bring the moistened compacted product to a moisture content approximately equal to the moisture content of the compacted product before step c) of moistening.
- drying is carried out for a period of time between 5 second and 80 seconds, preferably between 10 seconds and 20 seconds.
- Step d) of drying is carried out at a temperature between 80°C and 120°C, for a period of time between 10 seconds and 80 seconds.
- Step d) of drying is carried out by suspending using air the moistened compacted product under hot air.
- Step d) of drying is carried out by exposure of the moistened compacted product to infrared (IR) radiation.
- The soluble coffee particles are freeze-dried coffee particles, having preferably an average size between 800 micrometers and 2 millimeters.
- the moistening step follows the compaction step within less than 10 seconds, preferably within less than 5 seconds.
- the drying step follows the moistening step within less than 10 seconds, preferably within less than 5 seconds.
- the method further comprises a subsequent step e) of cooling the soluble coffee tablet having been dried to a temperature below 30°C, preferably to a temperature comprised between 10°C and 30°C, even more preferably to a temperature comprised between 15°C and 30°C.

The present invention also proposes a soluble coffee tablet which is likely to be obtained by the manufacturing method presented.

According to a preferred but non-restrictive aspect, this tablet comprises an internal part and an external part entirely surrounding the internal part, wherein the internal part is porous and the external part forms a hardened crust having a thickness of at least 20 micrometers.

According to another preferred but non-restrictive aspect, this tablet comprises an internal part and an external part entirely surrounding the internal part, wherein the internal part is porous and the external part forms a hardened crust.

The external part of the soluble coffee tablet has a density greater than the density of the internal part. The average density of the external structure is 1.5 to 3.5 times greater than the average density of the internal structure.

The present invention also relates to a method for preparing a coffee-based beverage comprising the addition of at least one soluble coffee tablet as obtained with the proposed manufacturing method in a volume of water suitable for the total dissolution of the at least one soluble coffee tablet.

BRIEF DESCRIPTION OF THE DRAWINGS

Other characteristics and advantages of the invention will become clear from the following description which is only given for illustrative purposes and is in no way limitative and should be read with reference to the attached drawings on which:

- Figure 1 is a scanning electron microscope (SEM) image of a transverse section of a soluble coffee tablet prepared pursuant to test n°3, that is without any moistening and drying post-processing steps ;
- Figure 2 is a scanning electron microscope (SEM) image of a transverse section of a soluble coffee tablet prepared pursuant to test n°6 ;
- Figure 3 is a scanning electron microscope (SEM) image of a transverse section of a soluble coffee tablet prepared pursuant to test n°7 ;
- Figure 4 is a scanning electron microscope (SEM) image of a transverse section of a soluble coffee tablet prepared pursuant to test n°8 ;
- Figure 5 is a scanning electron microscope (SEM) image of a transverse section of a soluble coffee tablet prepared pursuant to test n°10 ;
- Figure 6 is a scanning electron microscope (SEM) image of a transverse section of a soluble coffee tablet prepared pursuant to test n°11.

DETAILED DESCRIPTION OF THE INVENTION

The method for manufacturing soluble coffee tablets of the invention has the distinctive feature of using as the raw material a coffee composition comprising soluble coffee particles. The coffee composition is thus a solid coffee composition, comprising dry soluble coffee particles, with a moisture content preferably lower than 6%.

More precisely, the coffee composition comprises coffee which consists only of soluble coffee particles. Most preferably, the coffee composition comprises only coffee without any other components.

Soluble coffee is manufactured from roast coffee that is lixiviated with water, and then dehydrated. More precisely, the soluble elements of the roast coffee are extracted during the water lixiviation to form a coffee solution, which coffee solution is then dehydrated to make soluble coffee.

Dissolution of soluble coffee occurs nearly instantaneously in hot water such dissolution being total as the soluble coffee has been made from a dehydrated coffee solution. On the contrary, roast and ground coffee does not dissolve - or only very slightly - by mere contact with water or water vapor. Further, after extraction of the active principle of roast and ground coffee - by decoction, lixiviation, or percolation for instance - there always remain a solid residue non-soluble in water.

Soluble coffee consists of coffee particles in the form of powder and/or granules. "Powder" refers to a collection of particles whose dimensions are smaller than 1 millimeter. "Granules" refers to particles whose dimensions are greater than 1 millimeter, but generally smaller than 4 millimeters.

For the manufacture of soluble coffee tablets with the method presented below, freeze-dried coffee particles, i.e. coffee particles obtained from a concentrated solution of liquid coffee that is frozen and then dried by sublimation of the ice to obtain powder and/or granules, are preferably used. The coffee particles obtained are dry, i.e. they have a moisture content preferably lower than 6%. In a preferred but non-restrictive embodiment, the coffee composition comprises only particles of soluble coffee, to the exclusion of any other compound, in particular without any additive.

A significant advantage of the proposed method for manufacturing soluble coffee tablets, as will be seen in the examples below, is that it can be implemented using any type of soluble coffee, in particular freeze-dried coffee, available commercially. One of the advantages of the proposed method for manufacturing soluble coffee tablets is to be able to directly use the soluble coffee particles available commercially without any preliminary processing. Alternatively, a pre-processing may be carried out, in particular to vary the size of the soluble coffee particles in order to optimize the performance of the manufacturing method. It could also be contemplated to form the tablets from soluble coffee particles specifically manufactured for the implementation of the method even if such a step is not necessary.

After having taken a quantity of a coffee composition comprising soluble coffee particles, the method for manufacturing the tablet comprises a step of compaction intended to form a compacted coffee product, wherein this compaction step is followed by post-processing intended to strengthen the mechanical resistance of the compacted coffee product in order to form the soluble coffee tablet which has qualities required for transport, handling and storage, while preserving satisfactory dissolution.

More precisely, the proposed manufacturing method consists in forming, during the compaction step, a compacted product with high porosity to promote its dissolution in hot water and with a minimum of cohesion to be handled, at least during the post-processing step. The purpose of this post-processing step is to create within the compacted product a main body, called the core, surrounded by a reinforced structure, a genuine crust surrounding the core.

To this end, the post-processing step comprises a step of moistening of the compacted coffee product, wherein this moistening step has the aim of moistening the surface of the compacted product, with preferably a certain penetration of water in the compacted product, to not have only a moistening of the surface of the compacted product. This moistening step has the aim of creating a moistened portion on the surface of the compacted product, wherein this moistened portion extends to a sufficient depth inside the compacted product corresponding approximately to the thickness of the desired resistant structure sought. As the compacted coffee product is soluble, the moistening step causes the structure of the moistened portion to be substantially modified. In case only water is used to moisten the compacted coffee product, there is a modification of the structure of the final soluble coffee tablet (*i.e.* after drying) but no modification of the composition of the tablet.

In post-processing, the moistening step is followed by a drying step, the purpose of which is to dry the moistened portion of the compacted product so as to form the external resistant structure. Moistening followed by drying of the compacted soluble coffee product forms a product with a porous core surrounded by a crust, i.e. a porous internal structure surrounded by an external structure with a greater density than the internal structure and with a thickness sufficient to increase the mechanical resistance of the final tablet.

As indicated above, the compaction step has the aim of forming a compact product with a high porosity but with a minimum of cohesion for handling during the post-processing phase.

To this end, the quantity of coffee composition taken is placed in a compaction system in which the compaction stress is selected to obtain a compacted product with a density between 0.4 $g/cm^3$ and 0.8 $g/cm^3$. Preferably, the compaction stress is selected to form a compacted product with a density between 0.45 $g/cm^3$ and 0.7 $g/cm^3$, and even more preferably between 0.5 $g/cm^3$ and 0.6 $g/cm^3$.

The parameters of the compaction step are thus adjusted to have a compaction ratio between 27% and 55%. Preferably, the compaction step is adapted for having a compaction ratio between 31% and 48%, and even more preferably between 34% and 41%. We remind here that the compaction ratio corresponds to the ratio of the apparent density of the compacted coffee on the true density of the coffee powder (which is 1.45 $g/cm^3$). It should be noted that the theoretical porosity of the compacted product corresponds to the formulae below:

$$\textit{theoretical porosity (in \%) = 100\% - compaction ratio (in \%)}$$

The compaction system used can be of any type, for example a rotary press or a hydraulic press. In principle, these compaction systems comprise a matrix within which one or two punches can slide, wherein these elements form a confinement space in which the coffee composition is placed for compaction.

It is the action of the punches which exerts the compaction stress necessary to form the compacted product. This applied compaction stress can consist in bringing the coffee composition to a determined compaction volume, and in possibly maintaining this volume for a determined compaction time, i.e. maintaining the punches in a fixed position for a given period of time.

This compaction stress can consist in applying a determined compaction pressure to said coffee composition. In this case, the compaction pressure is, for example, between 0.8 MPa and 15 MPa, preferably between 1.3 MPa and 7 MPa, and even more preferably between 2 MPa and 4.5 MPa.

Preferably, the compaction speed to attain the determined compaction volume is comprised between 20 mm/s and 500 mm/s, and more preferably between 50 mm/s and 250 mm/s. Such compaction speed corresponds to the movement speed of the movable compressing punches, i.e. the ratio of displacement distance of said punches relative to the compression duration.

With regard to post-processing, the first step consists in moistening the surface of the compacted product resulting from the compaction step. Preferably, the moistening step follows the compaction step within less than 10 seconds, and most preferably within less than 5 seconds.

This moistening enables to solubilize the soluble coffee particles on the surface of the compacted product. Such moistening step thus causes the structure of the moistened portion to be substantially modified as the corresponding compacted soluble coffee slightly dissolve at the surface of the compacted product.

Moistening is carried out to solubilize the coffee particles from the surface to a minimal depth so as to form a moistened portion with a certain thickness and which will form a genuine exterior layer for the final tablet. In this respect, the moistening step can be described as "deep moistening". It is advisable, however, to control moistening in order to preserve a major part of the unmoistened compacted product, so that this unmoistened part, which will form the core of the tablet, preserves the characteristics of the compacted product, in particular in terms of density, porosity and dissolution. Even though there is a modification of the structure of the compacted coffee product, forming a "crust and core" tablet, it is of advantage to use only water (*i.e.* 100% water) to moisten the compacted coffee product so that the crust and the core of the final soluble coffee tablet (*i.e.* after drying) have the same composition.

As will be seen below in the comparison tests, it is necessary that a minimum quantity of water is added, thus involving a minimum moistening depth, and a sufficient thickness of the crust so that the increase in the resistance of the tablet is genuine. In a surprising manner, it will be noted that the increase in thickness of the crust does not significantly slow the dissolution of the soluble coffee tablet.

Thus, the moistening step preferably comprises the addition of a quantity of water so as to obtain a moistening of the exterior surface of the compacted product to a depth of at least 20 micrometers, and preferably to at least 40 micrometers. In addition, the quantity of water deposited can be controlled so that the moistened portion of the compacted product does not extend beyond a depth of 250 micrometers, and preferably not beyond 160 micrometers.

In a preferred manner, the quantity of water deposited is controlled to extend to a depth between 20 micrometers and 130 micrometers, and preferably between 40 micrometers and 90 micrometers, and more preferably still between 60 micrometers and 90 micrometers.

The distribution of the water deposited is between 1 mg/cm$^2$ and 3 mg/cm$^2$, and preferably still between 1.2 mg/cm$^2$ and 2.2 mg/cm$^2$. Preferably, the distribution of the water deposited is homogeneous, so as to obtain an approximately uniform moistened portion.

For a compacted product of approximately 2 grams, with a diameter of 25 millimeters, between 15 milligrams and 40 milligrams of water per tablet can be added for example, and preferably between 20 milligrams and 30 milligrams of water per tablet.

In addition, it is preferable to carry out the moistening step at a given controlled temperature to limit the development of bacteria. Thus, the moistening step is carried out preferably at a controlled temperature between 5°C and 25°C, preferably between 10°C and 15°C, or a controlled temperature higher than 60°C, for example between 60°C and 95°C, or in a preferred manner between 75°C and 80°C.

Various moistening techniques can be used, and are selected so that the added water has the most homogeneous possible distribution across the entire surface of the compacted product.

According to a preferred aspect of the invention, the moistening step is carried out by spraying water in the direction of the surface of the compacted product. This spraying of water can be continuous, *i.e.* can be applied directly to the entire surface of the compacted product, or sequential, *i.e.* applied successively to different sides of the compacted product. The spraying of water is a technique of rapid moistening, taking generally less than 1 second per application of water. Most preferably, each application of the moistening step by spraying is made in a period of time of between 50 milliseconds and 500 milliseconds, and most preferably in a period of time of between 100 milliseconds and 300 milliseconds. Preferably, the moistening by spraying is performed under a controlled temperature in one of the low or high ranges of temperatures mentioned above for preventing the development of bacteria.

A device comprising at least two atomisers is preferably used to spray the amount of water required per compacted soluble coffee. The number and arrangement of the atomizers will depend on the size and geometry of the tablets to moisten.

According to another aspect of the invention, the moistening step is carried out by the condensation of water in a humid atmosphere with suspension of the compacted product in air. The moisture content is controlled by any suitable moisture control methods. According to this technique, the compacted product is moistened in a completely homogeneous and continuous manner. An advantage of this technique is that the compacted product is not in contact with any external element which can deform its surface during moistening. Such moistening can, for example, consist in placing the compacted product in the chamber for a period of time between 5 seconds and 8 seconds. Preferably, it is placed in an atmosphere of relative humidity (RH) between 60% and 80%. Preferably, the chamber has a controlled temperature between 60°C and 80°C which prevents the development of bacteria.

For the moistening step, the compacted product can be placed in a chamber comprising means for control of temperature. Preferably, the moistening chamber also comprises means for control of moisture.

The second post-processing step is carried out immediately after the moistening step, and consists in drying the moistened portion of the compacted product. This drying step enables evaporation of the water in this moistened portion, which notably makes it possible to create solid bridges between the particles of the solubilized species during the moistening step.

The drying parameters are controlled to bring the moistened compacted product to a moisture content approximately equal to the moisture content of the compacted product before the moistening step. Most preferably, the drying parameters of the drying step are controlled to obtain a level of moisture of the compacted product which is comprised within a range of $\pm$ 0.2% around the initial level of moisture of the soluble coffee powder, preferably $\pm$ 0.1%, more preferably $\pm$ 0.05%, and even possibly, to restore the initial level of moisture.

Thus, the portion on the surface of the compacted product, deep moistened and then dried, forms a true crust, with a high density compared to the density of the core, thus strengthening the overall resistance of the soluble coffee tablet.

Preferably, the drying step is carried out rapidly after the moistening step to prevent the added water from penetrating too deeply in the core of the compacted product, in particular within less than 10 seconds after the moistening step has been performed. In a preferred manner, the moistening and drying steps occur one after the other in a continuous manner, or are spaced at most a few seconds apart (preferably less than 5 seconds).

During the moistening step, the level of moisture remains identical, or substantially identical, in the core of the compacted soluble coffee product. This is why the drying step is performed rapidly after the moistening step, and the duration of the drying step is preferably less than 80 seconds, preferably less than 30 seconds, preferably is comprised between 5 seconds and 20 seconds, and more preferably between 10 seconds and 20 seconds, so as to avoid that the penetration of the water applied over the outside surface of the soluble coffee tablet towards its core.

Drying can, for example, be carried out by hot air at a temperature between 80°C and 120°C. Preferably, such drying is performed for a period of time between 10 seconds and 80 seconds. This drying step can be carried out by suspending in air the moistened compacted product under hot air. Such hot air drying can be done with heated ambient air or with heated dry air.

Drying can also be carried out by exposure of the moistened compacted product to infrared (IR) radiation, within an infrared tunnel for example. For example, the moistened compacted product is exposed to infrared radiation of a wavelength (A) between 0.8 micrometers and 2 micrometers, for a period of time between 10 seconds and 80 seconds. The IR basically dries to a shallow depth. All the water added at the surface during the moistening step is thus eliminated within a very short drying duration, the initial weight of the soluble coffee tablet before moistening is substantially restored and a thin and tough crust is formed around the internal core.

The method according to the invention may also include an optional additional subsequent step which is a cooling step, aimed to cool the soluble coffee tablet having been dried, to a temperature below 30°C, preferably comprised between 10°C and 30°C, even more preferably comprised between 15°C and 30°C. Cooling the soluble coffee tablet at a temperature comprised between 15°C and 30°C is particularly advantageous as it prevents condensation of the humidity of ambient air.

Such cooling step could be for example implemented by placing the soluble coffee tablets through a flow of air at ambient temperature.

There may also be provided a final packaging step, after the drying step or after the cooling step if there is one, where the soluble coffee tablet is packaged within a moisture-tight packaging, preferably under inert gas. When in combination with the cooling step, this makes possible to avoid any condensation inside the packaging. The moisture-tight packaging under inert gas is advantageous so as to prevent any uptake of moisture of the soluble coffee tablet, which would have a detrimental effect on the dissolution behavior and could lead to the development of bacteria.

As already specified above, the proposed manufacturing method enables obtaining a soluble coffee tablet that is particularly resistant and that preserves a rapid dissolution time.

More precisely, the soluble coffee tablet thus manufactured has a three-dimensional form with a porous internal structure, called the core, and an external structure, called the crust, extending around the internal structure.

The external structure has a density greater than the density of the internal structure. Preferably, the internal structure has an average density between 0.4 g/cm$^3$ and 0.8 g/cm$^3$ while the external structure has an average density between 1.25 g/cm$^3$ and 1.35 g/cm$^3$. Preferably, the average density of the external structure is 1.5 to 3.5 times greater than the average density of the internal structure.

In terms of porosity, the internal structure has a porous phase with at least 30% of the pores having a size less than 5 micrometers. In addition, among the pores of the core, at least 95% of said pores are interconnected, which promotes the dissolution of the tablet in water.

The external structure, *i.e.* the crust, has the distinctive feature of comprising transverse pores, open pores and closed pores. "Transverse pore" refers to a pore forming a channel, or a fissure, between the exterior environment and the core of the tablet, thus promoting the penetration of water in the core. "Open pore" refers to a pore that is open toward the exterior environment at the external surface of the tablet, but that does not lead toward the core of the tablet. "Closed pore" refers to a pore buried in the crust that leads neither to the exterior environment nor to the core.

The external structure does not comprise hyperfine porosity, *i.e.* pores of size less than 5 micrometers.

The closed pores, buried in the external structure, have a size between 5 micrometers and 20 micrometers. These closed pores represent between 5% and 10% of the volume of the external structure.

The pores emerging on the surface of the tablet, called surface pores, encompassing both the open pores and the transverse pores, have a size between 10 micrometers and 800 micrometers, and preferably between 10 micrometers and 250 micrometers, with a maximum between 50 micrometers and 100 micrometers. In addition, these surface pores have a surface porosity between 1% and 20%, wherein surface porosity is defined as the ratio between the cumulative areas of the section of all the surface pores compared to the total area of the exterior surface of the crust. It should also be noted that the number of transverse pores is much higher than the number of open pores. Indeed, the transverse pores represent between 95% and 99% of the surface pores, whereas the open pores represent between 1% and 5% of the surface pores.

The thickness of the external structure is at least 20 micrometers, and preferably at least 40 micrometers. Preferably, the crust has a maximum thickness of less than 250 micrometers, and preferably less than 160 micrometers. In a preferred manner, the crust has a thickness between 40 micrometers and 130 micrometers, and preferably between 40 micrometers and 90 micrometers, and more preferably still between 60 micrometers and 90 micrometers. As it arises from the manufacturing method described above, this thickness depends on both the quantity of water deposited during the moistening step and the density of the compacted product.

The proposed soluble coffee tablet has both high resistance and rapid dissolution in hot water.

Indeed, such a soluble coffee tablet has a diametral resistance between 35 kPa and 420 kPa, preferably between 35 kPa and 250 kPa. The diametral resistance of the soluble coffee tablet - also called mechanical strength - reflects the hardness of the soluble coffee tablet. It is the ratio 2F/S where F is the breaking force applied diametrically in opposite senses to the soluble coffee tablet until it breaks and S the area of the soluble coffee tablet where the force F is applied, i.e. the lateral area of the soluble coffee tablet. The breaking force F is converted into pressure so as to be independent of the contact surface to which the force was applied. For a cylindrical tablet for example, the pressure at break or mechanical strength expressed in MPa is equal to twice the breaking force F (expressed in N) divided by the involved crown surface area of the cylinder (expressed in $mm^2$). The mechanical strength of the soluble coffee tablet is expressed in MPa (or in kPa). To measure the mechanical strength of the soluble coffee tablet, it can be used of a hardness tester such as the known 8M DR.SCHLEUNIGER® from PHARMATRON®.

Further, the soluble coffee tablet preferably dissolves in 80°C hot water in less than 90 seconds, preferably in less than 60 seconds, even more preferably between 30 seconds and 45 seconds.

Several comparison tests will now be presented to illustrate the description above, in particular for highlighting the advantages conferred by the proposed method, as well as by the structure of the soluble coffee tablet resulting from this manufacturing method.

For the various tests carried out, various types of soluble coffee were used:

- the coffee particles referred to as "N" correspond to freeze-dried coffee marketed in France under the name "*NESCAFE® SPECIAL FILTRE-arabicas sélectionnés*" (NESCAFE® SPECIAL FILTER-selected Arabica). An analysis of granulometry reveals that 38% of the particles of the coffee "N" have a size greater than 2 millimeters, 59.5% of the particles have a size between 800 micrometers and 2 millimeters, and the remaining 2.5% have a size less than 800 micrometers;

- the coffee particles referred to as "M" correspond to freeze-dried coffee marketed in France under the name "*MAXWELL HOUSE® QUALITE FILTRE*" (MAXWELL HOUSE® QUALITY FILTER). An analysis of granulometry reveals that 37% of the particles of the coffee "M" have a size greater than 2 millimeters, 58% of the particles have a size between 800 micrometers and 2 millimeters, and the remaining 5% have a size less than 800 micrometers;

- the coffee particles referred to as "N*" correspond to freeze-dried coffee of type "N" which has undergone pre-processing consisting in grinding the particles so as to have a size less than 630 micrometers. An analysis of granulometry reveals that 94% of the particles of the coffee "N*" have a size between 250 micrometers and 630 micrometers, and the remaining 6% have a size less than 250 micrometers.

Each coffee composition was compacted with an instrumented uniaxial hydraulic press in order to form a cylindrical tablet of approximately 2 grams with a diameter of 25 millimeters.

Two types of "moistening + drying" post-processing were tested.

The first type of post-processing, called "spraying + IR", consisted in moistening by spraying of a certain quantity of water, then drying by infrared radiation (wavelength λ between 0.8 micrometers and 2 micrometers) for a period of 15 seconds to 80 seconds. This "spraying + IR" processing was carried out with spraying nozzles with a diameter of 0.5 millimeters, according to a full moistening cone, and with short-wavelength IR lamps.

The second type of post-processing, called "moist air-suspension + dry air heating", consisted in moistening by passage of the compacted product in a moistening chamber at 75°C in an atmosphere of 50% relative humidity (RH) in order to condense a certain quantity of water, then by drying by passage of the moistened compacted product in a chamber of hot (120°C) and dry air for a period of 25 seconds to 60 seconds.

With regard to the characterization of the various tablets formed, the thickness of the crust was determined by statistical analysis of scanning electron microscope (SEM) images of transverse sections of the tablets (with 400 times magnification).

The porosity and its characteristics were measured by X-ray microtomography at a resolution of 1.5 micrometers/pixel. Porosity is characterized as the percentage of volume of the pores in relation to the volume studied (e.g. the volume of the pores in the core in relation to the volume of the core). Thus, what is referred as "Core porosity > 5 $\mu$m" represents the percentage of volume of the pores having a size higher than 5 micrometers in relation to the overall volume of the core of the tablet under study. Similarly, what is referred as "Core porosity < 5 $\mu$m" represents the percentage of volume of the pores having a size less than 5 micrometers in relation to the overall volume of the core of the tablet under study. Consequently, the sum of the percentages corresponding to the "Core porosity > 5 $\mu$m" and the "Core porosity < 5 $\mu$m" corresponds to the overall porosity of the core of the tablet.

The resistance of the coffee tablets was measured according to the diameter of the corresponding cylinder. This diametral resistance corresponds to the measurement of hardness of the tablet. Hardness is measured by applying a diametral force until the tablet breaks. A 8M DR.SCHLEUNIGER hardness tester has been used to carry out these hardness measurements.

Dissolution time is measured by introducing the soluble coffee tablet into a beaker and then adding 100 mL of 80°C hot water. The solution is stirred manually until complete dissolution of the tablet and dissolution is observed visually.

Comparison table 1 below presents soluble coffee tablets of type "N" compacted at various compaction pressures with no "moistening + drying" processing.

*Comparison table 1*

| Test number | 1 | 2 | 3 | 4 |
|---|---|---|---|---|
| Coffee ref. | N | N | N | N |
| Density after compaction (g/cm$^3$) | 0.45 | 0.5 | 0.6 | 0.7 |
| Tablet thickness (mm) | 8.9 | 8.1 | 6.8 | 5.8 |
| Compaction pressure (MPa) | 1.3 | 2.1 | 4.4 | 5.6 |
| Core porosity > 5 $\mu$m (%) | *Not measured* | 35 | 28 | *Not measured* |
| Core porosity < 5 $\mu$m (%) | *Not measured* | 25 | 27 | *Not measured* |
| Diametral resistance (kPa) | < 35 | < 35 | < 35 | < 35 |
| Dissolution time at 80°C (s) | 25-40 | 25-30 | 35-30 | 70-80 |

Comparison table 1 demonstrates that the dissolution time of the tablet in hot water is dependent on the density of said tablet; indeed, the denser a tablet, *i.e.* the more the tablet was compacted with high pressure, the longer the tablet's dissolution time.

In addition, it should be noted that the core has an overall porosity of about 55% to 60%, with a large fraction of the pores having a size less than 5 micrometers. Indeed, at least 30% of the pores of the core have a size less than 5 micrometers, and preferably between 40% and 60% of the pores have a size less than 5 micrometers.

Comparison table 2 below presents soluble coffee tablets of type "N" compacted at the same compaction pressure and then treated by various "moistening + drying" processes.

Comparison table 2 below presents soluble coffee tablets of type "N" compacted at the same compaction pressure and then treated by various "moistening + drying" processes.

*Comparison table 2*

| Test number | 3 | 5 | 6 | 7 | 8 | 9 |
|---|---|---|---|---|---|---|
| Coffee Ref. | N | N | N | N | N | N |
| Density after compaction (g/cm$^3$) | 0.6 | 0.6 | 0.6 | 0.6 | 0.6 | 0.6 |
| Tablet thickness (mm) | 6.8 | 6.8 | 6.8 | 6.8 | 6.8 | 6.8 |

(continued)

| Test number | 3 | 5 | 6 | 7 | 8 | 9 |
|---|---|---|---|---|---|---|
| Compaction pressure (MPa) | 4.4 | 4.4 | 4.4 | 4.4 | 4.4 | 4.4 |
| Post-processing technique | Not treated | Spraying + IR | Spraying + IR | Spraying + IR | Moist air-suspension + hot dry air | Moist air-suspension + hot dry air |
| Quantity of water deposited (mg) | 0 | 10 | 20 | 40 | 20 | 40 |
| Quantity of water deposited (mg/cm$^2$) | 0 | 0.7 | 1.32 | 2.6 | 1.32 | 2.6 |
| Drying time (s) | 0 | 15 | 20 | 80 | 25 | 60 |
| Crust thickness ($\mu$m) | 0 | *Not measured* | 30-130 avg. 45-90 | 40-160 avg.65-130 | 20-100 | 55-220 |
| Core porosity > 5 $\mu$m (%) | 28 | 28 | 28 | 28 | 28 | 28 |
| Core porosity < 5 $\mu$m (%) | 27 | 27 | 27 | 27 | 27 | 27 |
| Diametral resistance (kPa) | < 35 | < 35 | avg. 100 | avg. 200 | avg. 50 | avg. 100 |
| Dissolution time at 80°C (s) | 35-30 | 30-35 | 30-35 | 50-60 | 40-50 | 60-70 |

Comparison table 2 shows that the "moistening + drying" processing makes it possible to strengthen the resistance of the tablet, which is highly advantageous for guaranteeing the integrity of the tablet during the phases of storage, handling and transport during which the tablet is subject to impacts.

It should also be noted that the "moistening + drying" processing can be carried out in various ways which makes it possible to obtain a soluble coffee tablet with an improved resistance and a rapid dissolution time.

Comparison table 2 also highlights the fact that it is necessary to deposit a minimum quantity of water to obtain a genuine improvement in the resistance of the tablet.

Comparison table 3 below presents soluble coffee tablets of type "N" compacted at various compaction pressures, with or without the "moistening + drying" processing.

*Comparison table 3*

| Test number | 2 | 10 | 3 | 6 | 4 | 11 |
|---|---|---|---|---|---|---|
| Coffee | N | N | N | N | N | N |
| Density after compaction (g/cm$^3$) | 0.5 | 0.5 | 0.6 | 0.6 | 0.7 | 0.7 |
| Tablet thickness (mm) | 8.1 | 8.1 | 6.8 | 6.8 | 5.8 | 5.8 |
| Compaction pressure (MPa) | 2.1 | 2.1 | 4.4 | 4.4 | 5.6 | 5.6 |
| Post-processing technique | Not treated | Spraying + IR | Not treated | Spraying + IR | Not treated | Spraying + IR |
| Quantity of water deposited (mg) | 0 | 20 | 0 | 20 | 0 | 20 |

(continued)

| Test number | 2 | 10 | 3 | 6 | 4 | 11 |
|---|---|---|---|---|---|---|
| Quantity of water deposited (mg/cm$^2$) | 0 | 1.24 | 0 | 1.32 | 0 | 1.4 |
| Drying time (s) | 0 | 20 | 0 | 20 | 0 | 20 |
| Crust thickness ($\mu$m) | 0 | 30-130 avg.60-90 | 0 | 30-130 avg.45-90 | 0 | 30-130 avg.40-90 |
| Core porosity > 5 $\mu$m (%) | 35 | 35 | 28 | 28 | *Not measured* | *Not measured* |
| Core porosity < 5 $\mu$m (%) | 25 | 25 | 27 | 27 | *Not measured* | *Not measured* |
| Diametral resistance (kPa) | < 35 | avg. 50 | < 35 | avg. 100 | < 35 | 170 |
| Dissolution time at 80°C (s) | 25-30 | 30-35 | 35-30 | 30-35 | 70-80 | 70-80 |

As could be seen in comparison table 2, the greater the compaction pressure the longer the dissolution time of the tablet in hot water.

Comparison table 3 highlights the fact that the "moistening + drying" processing which makes it possible to strengthen the resistance of the tablet has only very little effect on the dissolution time of the tablet in hot water.

Thus, the external structure of the tablet forming a crust confers better resistance to the tablet without substantially increasing the dissolution time of the tablet, which is particularly advantageous.

Comparison table 4 below presents soluble coffee tablets of type "M", compacted with various compaction pressures, with or without "moistening + drying" processing.

*Comparison table 4*

| Test number | 12 | 13 | 14 | 15 |
|---|---|---|---|---|
| Coffee | M | M | M | M |
| Density after compaction (g/cm$^3$) | 0.5 | 0.6 | 0.7 | 0.6 |
| Tablet thickness (mm) | 8.1 | 6.8 | 5.8 | 6.8 |
| Compaction pressure (MPa) | 2.1 | 3.9 | 6.5 | 3.9 |
| Post-processing technique | Spraying + IR | Spraying + IR | Spraying + IR | Not treated |
| Quantity of water deposited (mg) | 20 | 20 | 20 | 0 |
| Quantity of water deposited (mg/cm$^2$) | 1.24 | 1.32 | 1.4 | 0 |
| Drying time (s) | 20 | 20 | 20 | 0 |
| Diametral resistance (kPa) | avg. 100 | avg. 100 | avg.200 | < 35 |
| Dissolution time at 80°C (s) | 35-40 | 40-45 | 80-90 | 35-40 |

Comparison table 4 shows the same conclusions that previously could be drawn for tablets formed with soluble coffee particles of another type, and thus having different structural properties, in terms of grain size, pore size, etc.

In particular, comparison table 4 reveals that the "moistening + drying" processing increases the mechanical resistance of the tablet without substantially increasing the dissolution time of the tablet, which is particularly advantageous.

Lastly, comparison table 5 below presents soluble coffee tablets of various types, compacted with the same compaction pressure, with the same "moistening + drying" processing.

# EP 2 725 920 B1

*Comparison table 5*

| Test number | 11 | 16 | 14 |
|---|---|---|---|
| Coffee | N | N* | M |
| Density after compaction (g/cm$^3$) | 0.7 | 0.7 | 0.7 |
| Tablet thickness (mm) | 5.8 | 5.8 | 5.8 |
| Compaction pressure (MPa) | 5.6 | 5.1 | 6.5 |
| Post-processing technique | Spraying + IR | Spraying + IR | Spraying + IR |
| Quantity of water deposited (mg) | 20 | 20 | 20 |
| Quantity of water deposited (mg/cm$^2$) | 1.4 | 1.4 | 1.4 |
| Drying time (s) | 20 | 20 | 20 |
| Crust thickness ($\mu$m) | 30-130 avg. 40-90 | 30-130 avg. 40-90 | 30-130 avg. 40-90 |
| Diametral resistance (kPa) | 170 | avg. 150 | avg. 200 |
| Dissolution time at 80°C (s) | 70-80 | 80-90 | 80-90 |

Comparison table 5 confirms the conclusions of comparison table 4 which showed that the proposed "moistening + drying" processing method provides definite advantages for various types of soluble coffee, in particular freeze-dried coffee.

More precisely, comparison table 5 highlights the fact that the advantages in terms of an increase in tablet resistance without an increase in dissolution time are found for soluble coffee particles whose particle size is markedly lower.

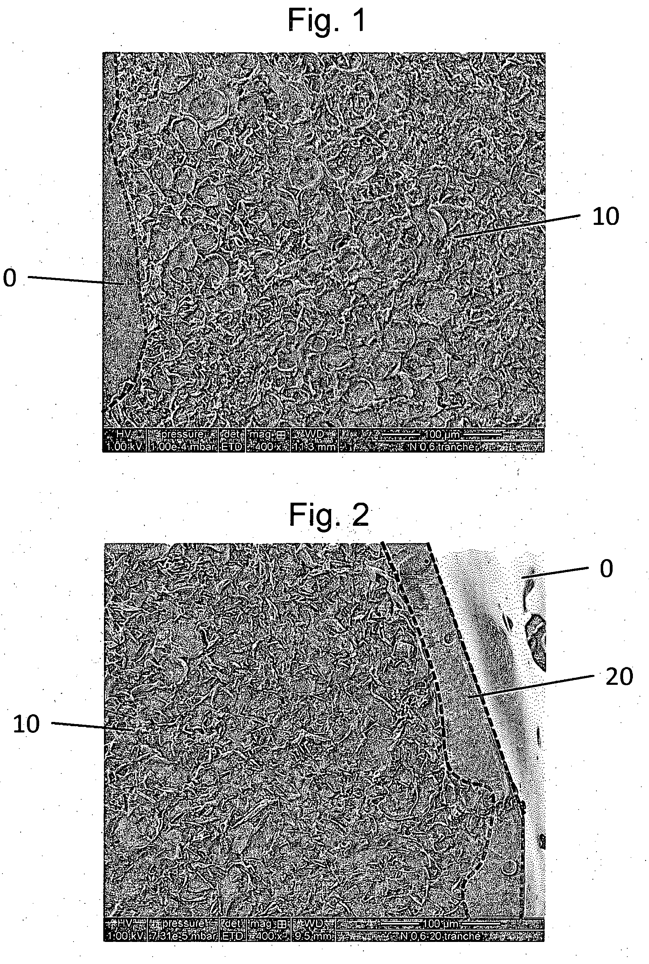

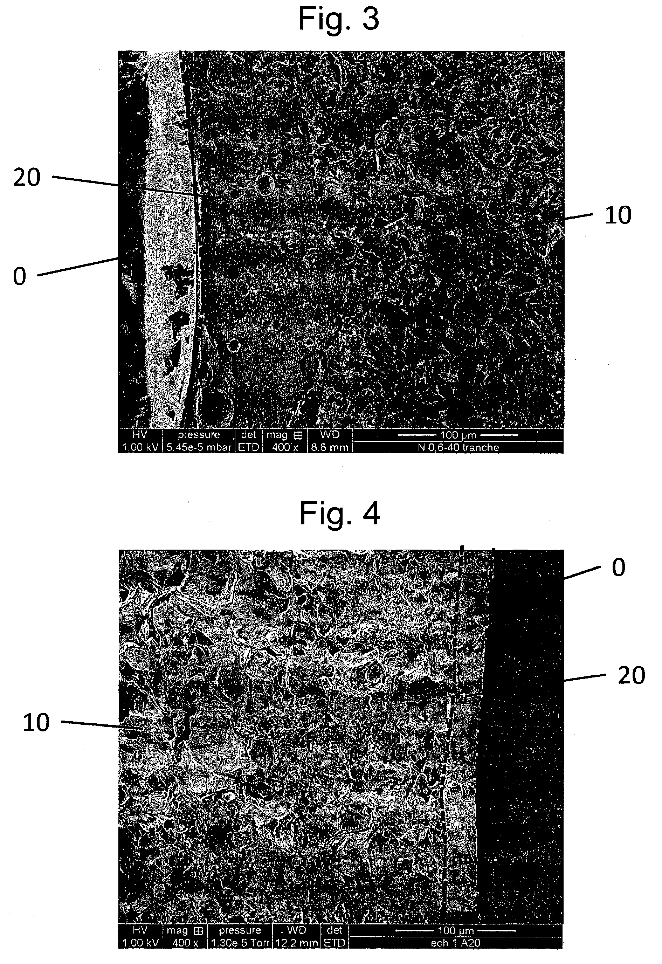

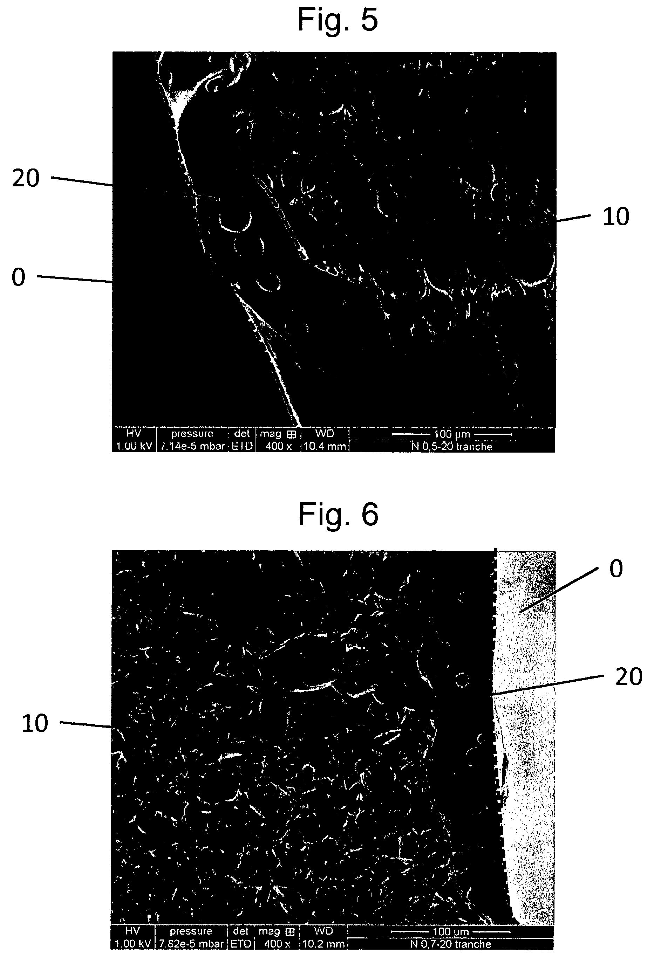

Figures 1 to 6 are scanning electron microscope (SEM) images of a transverse section of a soluble coffee tablet prepared pursuant to tests n°3, 6, 7, 8, 10, and 11 as described above.

These images have been acquired by a scanning electron microscope (SEM) on soluble coffee tablets that have been cut transversely by hand.

The images correspond to a magnification of the tablets of 400 times. The areas referenced 0 in the images corresponds to the background and are therefore not part of the soluble coffee tablets.

Figures 2 to 6 clearly illustrate the particular structure of the soluble coffee tablet made of an internal part 10 surrounded by an external part 20, which respectively correspond to the core 10 and the crust 20 of the soluble coffee tablets.

Figure 1 illustrates the structure of the soluble coffee tablet prepared without any moistening and drying post-processing steps, which makes clear to the person skilled in the art that those moistening and drying post-processing steps enables forming the core and crust structure of the soluble coffee tablet.

BIBLIOGRAPHIC REFERENCES
- EP 1 008 554     - EP 0 229 920
- GB 1 384 384     - US 3,121,635
- GB 2 188 915     - CA 2 027 406
- WO 00/73208      - US 1,137,265
- US 2,379,230     - US 2,889,226
- AU2009/101002    - US 1,535,233
- GB 438 509       - GB 2 196 228
- WO 2006/004190   - SE 465 995
- WO 2007/077970   - DE 199 19 204
- EP 2 129 232

## Claims

1. A method for manufacturing a soluble coffee tablet comprising the following successive steps:

   a. Taking a quantity of a coffee composition comprising coffee, wherein the coffee consists of soluble coffee particles;

b. Compaction of the coffee composition to form a compacted coffee product of three-dimensional form being soluble;

c. Moistening of said compacted coffee product to moisten the exterior surface of the compacted product;

d. Drying of the moistened compacted product to form the soluble coffee tablet;

wherein the moistening of step c) comprises the deposition of a quantity of water on the surface of the compacted product with a distribution between 1 mg/cm$^2$ and 3 mg/cm$^2$, the combination of said moistening and drying forming a soluble coffee tablet having an internal part and an external part entirely surrounding the internal part, with the external part and the internal part have the same composition and the external part having a greater density than the density of the internal part.

2. The method of claim 1, wherein step b) of compaction comprises the following successive steps:

b1) Placement of the coffee composition in a confined space;

b2) Application of a determined compaction stress to obtain a compacted product with a density between 0.4 g/cm$^3$ and 0.8 g/cm$^3$, and preferably between 0.45 g/cm$^3$ and 0.7 g/cm$^3$, and even more preferably between 0.5 g/cm$^3$ and 0.6 g/cm$^3$;

b3) Release of the compaction stress.

3. The method of claim 2, wherein step b2) of application of a determined compaction stress consists in applying a determined compaction pressure to said coffee composition, wherein the compaction pressure is preferably between 0.8 MPa and 15 MPa, more preferably between 1.3 MPa and 7 MPa, and even more preferably between 2 MPa and 4.5 MPa.

4. The method of any one of claims 1 to 3, wherein step c) of moistening comprises the addition of a quantity of water so as to obtain a moistening of the exterior surface of the compacted product to a depth of at least 20 micrometers, and preferably at least 40 micrometers.

5. The method of any one of claims 1 to 4, wherein, step c) of moistening comprises the deposition of a quantity of water on the surface of the compacted product with a distribution between 1.2 mg/cm$^2$ and 2.2 mg/cm$^2$.

6. The method of any one of claims 1 to 5, wherein step c) of moistening is carried out by spraying water in direction of the surface of the compacted product or by suspension in air of the compacted product in a controlled moist atmosphere.

7. The method of any one of claims 1 to 6, wherein step d) of drying of the moistened compacted product is controlled for evaporation of the water contained in the moistened external portion of the moistened compacted product.

8. The method of any one of claims 1 to 7, wherein step d) of drying of the moistened compacted product is controlled to bring the moistened compacted product to a moisture content substantially equal to the moisture content of the compacted product before step c) of moistening.

9. The method of any one of claims 1 to 8, wherein step d) of drying is carried out for a period of time between 5 second and 80 seconds, preferably between 10 seconds and 20 seconds.

10. The method of any one of claims 1 to 9, wherein step d) of drying is carried out at a temperature between 80°C and 120°C, for a period of time between 10 seconds and 80 seconds.

11. The method of any one of claims 1 to 10, wherein step d) of drying is carried out by suspension in air of the moistened compacted product under hot air or by exposure of the moistened compacted product to infrared (IR) radiation.

12. The method of any one of claims 1 to 12, wherein the soluble coffee particles are freeze-dried coffee particles.

13. The method of any one of claims 1 to 12, wherein the moistening step follows the compaction step within less than 10 seconds, preferably within less than 5 seconds, and the drying step follows the moistening step within less than 10 seconds, preferably within less than 5 seconds.

14. The method of any one of claims 1 to 13, further comprising a subsequent step e) of cooling the soluble coffee tablet having been dried to a temperature below 30°C, preferably to a temperature comprised between 10°C and 30°C, even more preferably to a temperature comprised between 15°C and 30°C.

15. A soluble coffee tablet obtainable by the method of manufacturing of any one of claims 1 to 14, **characterized in that** it comprises an internal part and an external part entirely surrounding the internal part, wherein the external part and the internal part have the same composition, the external part has an average density 1.5 to 3.5 times greater than an average density of the internal part, and the external part has a thickness of at least 20 micrometers.

**Patentansprüche**

1. Verfahren zur Herstellung eines Tabs aus löslichem Kaffee, das die folgenden aufeinanderfolgenden Schritte umfasst:

   a. Nehmen einer Menge von einer Kaffeemischung, die Kaffee umfasst, wobei der Kaffee aus löslichen Kaffeeteilchen besteht;
   b. Verdichtung der Kaffeemischung zum Bilden eines verdichteten Kaffeeprodukts mit dreidimensionaler Form, das löslich ist;
   c. Befeuchten des verdichteten Kaffeeprodukts zum Befeuchten der Außenfläche des verdichteten Produkts;
   d. Trocknen des befeuchteten verdichteten Produkts zum Bilden des Tabs aus löslichem Kaffee;

   wobei das Befeuchten von Schritt c) das Aufbringen einer Menge Wasser auf die Fläche des verdichteten Produkts mit einer Verteilung zwischen 1 mg/cm$^2$ und 3 mg/cm$^2$ umfasst, wobei die Kombination des Befeuchtens und des Trocknens einen Tab aus löslichem Kaffee bildet, der einen inneren Teil und einen äußeren Teil aufweist, der den inneren Teil vollständig umgibt, wobei der äußere Teil und der innere Teil die gleiche Zusammensetzung aufweisen und der äußere Teil eine höhere Dichte als die Dichte des inneren Teils aufweist.

2. Verfahren nach Anspruch 1, wobei der Schritt b) der Verdichtung die folgenden aufeinanderfolgenden Schritte umfasst:

   b1) Unterbringen der Kaffeemischung in einem eingeschlossenen Raum;
   b2) Anwenden einer bestimmten Verdichtungsbelastung zum Erhalten eines verdichteten Produkts mit einer Dichte zwischen 0.4 g/cm$^3$ und 0.8 g/cm$^3$ und vorzugsweise zwischen 0.45 g/cm$^3$ und 0.7 g/cm$^3$, und, noch mehr zu bevorzugen, zwischen 0.5 g/cm$^3$ und 0.6 g/cm$^3$;
   b3) Aufhebung der Verdichtungsbelastung.

3. Verfahren nach Anspruch 2, wobei der Schritt b2) der Anwendung einer bestimmten Verdichtungsbelastung im Anwenden eines bestimmten Verdichtungsdrucks auf die Kaffeemischung besteht, wobei der Verdichtungsdruck vorzugsweise zwischen 0.8 MPa und 15 MPa, mehr zu bevorzugen zwischen 1.3 MPa und 7 MPa und sogar noch mehr zu bevorzugen zwischen 2 MPa und 4.5 MPa, beträgt.

4. Verfahren nach einem der Ansprüche 1 bis 3, wobei der Schritt c) des Befeuchtens die Beimengung einer Menge Wasser umfasst, um eine Befeuchtung der äußeren Fläche des verdichteten Produkts bis zu einer Tiefe von mindestens 20 Mikrometern und vorzugsweise mindestens 40 Mikrometern zu erhalten.

5. Verfahren nach einem der Ansprüche 1 bis 4, wobei der Schritt c) des Befeuchtens das Aufbringen einer Menge Wasser auf der Fläche des verdichteten Produkts mit einer Verteilung zwischen 1.2 mg/cm$^2$ und 2.2 mg/cm$^2$ umfasst.

6. Verfahren nach einem der Ansprüche 1 bis 5, wobei der Schritt c) des Befeuchtens durch Sprühen von Wasser in Richtung der Fläche des verdichteten Produkts oder durch Tragen des verdichteten Produkts in Luft in einer kontrollierten feuchten Atmosphäre durchgeführt wird.

7. Verfahren nach einem der Ansprüche 1 bis 6, wobei der Schritt d) des Trocknens des befeuchteten verdichteten Produkts auf die Verdampfung von Wasser kontrolliert wird, das in dem befeuchteten äußeren Abschnitt des befeuchteten verdichteten Produkts enthalten ist.

8. Verfahren nach einem der Ansprüche 1 bis 7, wobei der Schritt d) des Trocknens des befeuchteten verdichteten Produkts kontrolliert wird, um das befeuchtete verdichtete Produkt auf einen Feuchtigkeitsgehalt zu bringen, der im Wesentlichen gleich dem Feuchtigkeitsgehalt des verdichteten Produkts vor dem Schritt c) des Befeuchtens ist.

9. Verfahren nach einem der Ansprüche 1 bis 8, wobei der Schritt d) des Trocknens während eines Zeitraums von zwischen 5 Sekunden und 80 Sekunden, vorzugsweise zwischen 10 Sekunden und 20 Sekunden, durchgeführt wird.

10. Verfahren nach einem der Ansprüche 1 bis 9, wobei der Schritt d) des Trocknens bei einer Temperatur zwischen 80 °C und 120 °C während eines Zweitraums zwischen 10 Sekunden und 80 Sekunden durchgeführt wird.

11. Verfahren nach einem der Ansprüche 1 bis 10, wobei der Schritt d) des Trocknens durch Lufttragen des befeuchteten verdichteten Produkts unter Heißluft oder dadurch durchgeführt wird, dass das verdichtete Produkt Infrarotstrahlung (IR) ausgesetzt wird.

12. Verfahren nach einem der Ansprüche 1 bis 12, wobei die löslichen Kaffeeteilchen gefriergetrocknete Kaffeeteilchen sind.

13. Verfahren nach einem der Ansprüche 1 bis 12, wobei der Befeuchtungsschritt innerhalb von weniger als 10 Sekunden, vorzugsweise innerhalb von weniger als 5 Sekunden, auf den Verdichtungsschritt folgt und der Trocknungsschritt innerhalb von weniger als 10 Sekunden, vorzugsweise innerhalb von weniger als 5 Sekunden, auf den Befeuchtungsschritt folgt.

14. Verfahren nach einem der Ansprüche 1 bis 13, das ferner einen darauffolgenden Schritt e) zum Kühlen des getrockneten Tabs aus löslichem Kaffee auf eine Temperatur unter 30 °C, vorzugsweise eine Temperatur, die zwischen 10 °C und 30 °C enthalten ist, sogar noch mehr zu bevorzugen, auf eine Temperatur, die zwischen 15 °C und 30 °C enthalten ist, umfasst.

15. Tab aus löslichem Kaffee, der durch das Herstellungsverfahren nach einem der Ansprüche 1 bis 14 erhalten werden kann, **dadurch gekennzeichnet, dass** er einen inneren Teil und einen äußeren Teil umfasst, der den inneren Teil vollständig umgibt, wobei der äußere Teil und der innere Teil die gleiche Zusammensetzung aufweisen, wobei der äußere Teil eine durchschnittliche Dichte aufweist, die 1.5 bis 3.5 Mal höher ist als die durchschnittliche Dichte des inneren Teils, und der äußere Teil eine Dicke von mindestens 20 Mikrometern aufweist.

**Revendications**

1. Procédé de fabrication d'une pastille de café soluble comprenant les étapes successives suivantes :

   a. Prendre une quantité d'une composition de café comprenant du café, dans lequel le café consiste en des particules de café soluble ;
   b. Compacter la composition de café pour former un produit à base de café compacté de forme tridimensionnelle soluble ;
   c. Humidifier ledit produit à base de café compacté pour humidifier la surface extérieure du produit compacté ;
   d. Sécher le produit compacté humidifié pour former la pastille de café soluble ;

   dans lequel l'humidification à l'étape c) comprend le dépôt d'une quantité d'eau sur la surface du produit compacté avec une distribution entre 1 mg/cm$^2$ et 3 mg/cm$^2$, la combinaison de ladite humidification et dudit séchage formant une pastille de café soluble comportant une portion interne et une portion externe entourant entièrement la portion interne, la portion externe et la portion interne ayant la même composition et la portion externe ayant une densité plus élevée que la densité de la portion interne.

2. Procédé selon la revendication 1, dans lequel l'étape b) de compaction comprend les étapes successives suivantes :

   b1) Placer la composition de café dans un espace confiné ;
   b2) Appliquer une contrainte de compaction déterminée pour obtenir un produit compacté avec une densité entre 0,4 g/cm$^3$ et 0,8 g/cm$^3$, et de préférence entre 0,45 g/cm$^3$ et 0,7 g/cm$^3$, et encore plus préférablement entre 0,5 g/cm$^3$ et 0,6 g/cm$^3$ ;
   b3) Relâcher la contrainte de compaction.

3. Procédé selon la revendication 2, dans lequel l'étape b2) d'application d'une contrainte de compaction déterminée consiste en l'application d'une pression de compaction déterminée à ladite composition de café, dans lequel la pression de compaction est de préférence entre 0,8 MPa et 15 MPa, plus préférablement entre 1,3 MPa et 7 MPa, et encore plus préférablement entre 2 MPa et 4,5 MPa.

4. Procédé selon l'une quelconque des revendications 1 à 3, dans lequel l'étape c) d'humidification comprend l'ajout d'une quantité d'eau de manière à obtenir une humidification de la surface extérieure du produit compacté à une profondeur d'au moins 20 micromètres, et de préférence au moins 40 micromètres.

5. Procédé selon l'une quelconque des revendications 1 à 4, dans lequel, l'étape c) d'humidification comprend le dépôt d'une quantité d'eau sur la surface du produit compacté avec une distribution entre 1,2 mg/cm$^2$ et 2,2 mg/cm$^2$.

6. Procédé selon l'une quelconque des revendications 1 à 5, dans lequel l'étape c) d'humidification est effectuée par pulvérisation d'eau en direction de la surface du produit compacté ou par aéroportance du produit compacté dans une atmosphère humide contrôlée.

7. Procédé selon l'une quelconque des revendications 1 à 6, dans lequel l'étape d) de séchage du produit compacté humidifié est contrôlée pour une évaporation de l'eau contenue dans la portion externe humidifiée du produit compacté humidifié.

8. Procédé selon l'une quelconque des revendications 1 à 7, dans lequel l'étape d) de séchage du produit compacté humidifié est contrôlée pour amener le produit compacté humidifié à une teneur en humidité sensiblement égale à la teneur en humidité du produit compacté avant l'étape c) d'humidification.

9. Procédé selon l'une quelconque des revendications 1 à 8, dans lequel l'étape d) de séchage est effectuée pendant une période de temps entre 5 secondes et 80 secondes, de préférence entre 10 secondes et 20 secondes.

10. Procédé selon l'une quelconque des revendications 1 à 9, dans lequel l'étape d) de séchage est effectuée à une température entre 80 °C et 120 °C, pendant une période de temps entre 10 secondes et 80 secondes.

11. Procédé selon l'une quelconque des revendications 1 à 10, dans lequel l'étape d) de séchage est effectuée par aéroportance du produit compacté humidifié dans un air chaud ou par exposition du produit compacté humidifié à un rayonnement infrarouge (IR).

12. Procédé selon l'une quelconque des revendications 1 à 12, dans lequel les particules de café soluble sont des particules de café lyophilisé.

13. Procédé selon l'une quelconque des revendications 1 à 12, dans lequel l'étape d'humidification suit l'étape de compaction dans les 10 secondes qui suivent, de préférence dans les 5 secondes qui suivent, et l'étape de séchage suit l'étape d'humidification dans les 10 secondes qui suivent, de préférence dans les 5 secondes qui suivent.

14. Procédé selon l'une quelconque des revendications 1 à 13, comprenant en outre l'étape e) suivante de refroidissement de la pastille de café soluble qui a été séchée à une température inférieure à 30 °C, de préférence à une température comprise entre 10 °C et 30 °C, encore plus préférablement à une température comprise entre 15 °C et 30 °C.

15. Pastille de café soluble pouvant être obtenue par le procédé de fabrication selon l'une quelconque des revendications 1 à 14, **caractérisée en ce qu'**elle comprend une portion interne et une portion externe entourant entièrement la portion interne, dans laquelle la portion externe et la portion interne ont la même composition, la portion externe a une densité moyenne 1,5 à 3,5 fois plus élevée que la densité moyenne de la portion interne, et la portion externe a une épaisseur d'au moins 20 micromètres.

# Fig. 1

# Fig. 2

# Fig. 3

# Fig. 4

## Fig. 5

## Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1008554 A
- GB 1384384 A
- GB 2188915 A
- WO 0073208 A
- US 2379230 A
- AU 2009101002
- GB 438509 A
- WO 2006004190 A
- WO 2007077970 A
- EP 2129232 A

- EP 0229920 A
- US 3121635 A
- CA 2027406
- US 1137265 A
- US 2889226 A
- GB 2196228 A
- SE 465995
- DE 19919204
- WO 2004034798 A
- US 1535233 A